# EUROPÄISCHE PATENTSCHRIFT

(11) **EP 1 571 091 B1**
(45) Veröffentlichungstag und Bekanntmachung des Hinweises auf die Patenterteilung: **29.04.2009**
(21) Anmeldenummer: 05101721.8
(22) Anmeldetag: 04.03.2005
(51) Int. Cl.: B65B 51/14

(54) **Schweisseinrichtung**
Welding device
Appareil de soudage.

(30) Priorität: 05.03.2004 AT 3842004
(43) Veröffentlichungstag der Anmeldung: 07.09.2005
(73) Patentinhaber: Kuchler, Fritz, A-9020 Klagenfurt (AT)
(72) Erfinder: Kuchler, Fritz, A-9020 Klagenfurt (AT)
(74) Vertreter: Müllner, Martin

(56) Entgegenhaltungen:
- DE-A1- 3 312 781
- FR-A- 2 835 806
- US-A- 4 378 266
- US-A- 4 650 535
- US-A- 4 697 401
- US-A- 5 398 448

## Beschreibung

### Technisches Gebiet

Die vorliegende Erfindung betrifft eine Schweißeinrichtung zum Verschweißen von zumindest zwei übereinander liegenden Folien mit einer Druckplatte, einem Andruckrahmen und einem Heizelement, insbesondere als Ablegetablett für eine Aufschnittschneidemaschine, sowie eine Aufschnittschneidemaschine mit solch einer Schweißeinrichtung.

### Stand der Technik

Aus der EP 1260327 A ist beispielsweise eine Anordnung einer Aufschnittschneidemaschine mit einer im Anschluss an diese aufgestellten Schweißstation bekannt. Die Anordnung verfügt weiters über eine Folienzufuhr- und Schneideeinrichtung und erledigt nach dem Einlegen des Schnittguts auf den Schnittgutwagen das Schneiden, Ablegen und Verpacken vollkommen automatisch. Ein im Ablegebereich der Aufschnittschneidemaschine situiertes Förderband führt das zwischen Folien abgelegte Schnittgut einer Schweißeinrichtung zu, bevor die fertige Verpackung die Anordnung verlässt. Aufschnittschneideanordnungen dieser Art sind ein entscheidender Beitrag für den Verkauf von frischen Waren, weil sich der Kunde selbst überzeugen kann, dass seine Bestellung frisch geschnitten und sofort verpackt wird. Die für den Verkaufsraum bestimmten Aufschnittschneideanordnungen sind durch die vielen automatisierten Arbeitsschritte ziemlich komplex und benötigen eine große Stellfläche.

### Offenbarung der Erfindung

### Technische Aufgabe

Die Erfindung zielt darauf ab, eine Aufschnittschneidemaschine der eingangs beschriebenen Art besonders kompakt auszubilden, sodass weniger Stellfläche benötigt wird und sowohl die Bedienung als auch die Wartung und Reinigung vereinfacht werden.

### Technische Lösung

Diese Aufgabe wird durch eine Schweißeinrichtung der eingangs genannten Art erfindungsgemäß dadurch gelöst, dass der Andruckrahmen aus jeweils um deren Längsachse umklappbaren Leisten besteht, wobei in der hochgestellten Stellung der Leisten die Druckplatte von oben frei zugänglich ist und in der Schweiß-Stellung der Leisten der Randbereich der Druckplatte von den Leisten überdeckt ist. Da das Ablagetablett üblicher Weise zum Ablegen von Aufschnittmustern unter dem Kettenrahmen bewegt wird, stellt die relativ geringe lichte Durchgangshöhe zwischen dem Gehäuse der Aufschnittschneidemaschine und der Unterkante des Kettenrahmens eine besondere Anforderung an ein Ablegetablett mit integrierter Schweißeinrichtung. Mit dem in Leisten unterteilten Andruckrahmen ergibt sich für die Schweißeinrichtung eine besonders kompakte Bauform mit geringer Höhe, die sich besonders für den Einsatz an Aufschnittschneidemaschinen eignet. Die umklappbaren Leisten ermöglichen, dass die gesamte Fläche der Druckplatte zum Einlegen einer Schweißfolie und zum Ablegen von Schnittgut frei zugänglich ist.

Es ist zweckmäßig, wenn jeder Leiste zum Verweilen in der hochgeschwenkten Position mindestens ein Federelement zugeordnet ist. Durch diese einfache aber sichere Lösung wird gewährleistet, dass die Leisten nach einem Schweißvorgang selbsttätig in die hochgeschwenkte Position verfahren.

Es ist ferner zweckmäßig, wenn die Leisten im äußeren Randbereich über eine Verriegelung, die Fixierstücke umfasst, verfügen und wenn die Fixierstücke zum Umklappen der Leisten drehbar gelagert sind. Mit Hilfe der Verriegelung wird sichergestellt, dass die Leisten dem während des Schweißvorgangs auftretenden Anpressdruck der Druckplatte standhalten und nicht nach oben weggedrückt werden. Beim Verdrehen eines Fixierstückes drückt eine Kante der Stirnfläche gegen die Unterseite einer durch Federkraft senkrecht gehaltenen Leiste. Nach einer Verdrehung der Fixierstücke um etwa 90° liegt die Stirnfläche des Fixierstückes an der Unterseite der zugehörigen Leiste flächig auf, und die zugehörige Leiste befindet sich waagrecht in der Schweißposition.

Zum Erzeugen des Anpressdrucks kann die Druckplatte gegenüber dem fest stehenden Andruckrahmen anhebbar angeordnet sein. Alternativ dazu kann der Andruckrahmen gegenüber der fest stehenden Druckplatte absenkbar angeordnet sein.

Um ein unbeabsichtigtes Berühren des Heizelementes zu vermeiden, ist es möglich, das Heizelement im Andruckrahmen unterzubringen. Eine alternative Ausführungsvariante, nämlich das Heizelement in der Druckplatte anzuordnen, hat den Vorteil einer einfacheren und mechanisch geschützten Verkabelung innerhalb eines Gehäuses.

Will man ein Einklemmen von Fingern zwischen dem Andruckrahmen und der Druckplatte vermeiden, ist es günstig, in den Leisten zur Überwachung des offenen Bereichs Sensoren und/oder Empfänger anzuordnen.

Nach einer alternativen Ausführungsform ist zum Umklappen der Leisten mindestens je ein Elektromagnet vorgesehen, der über einen Kniehebel mit der Leiste kinematisch verbunden ist. Durch die Kniehebelmechanik kann erreicht werden, dass die Kraft umso stärker wird, je weiter die Leisten umgeklappt werden. Damit kann ein ausreichender Anpressdruck erzielt werden, ohne dass die Druckplatte anhebbar bzw. der Andruckrahmen absenkbar ist. Damit kann auch die Verriegelung der Leisten entfallen. Weiters ist es auch ohne weitere Maßnahmen unmöglich, einen Finger zu quetschen. Solange die Leisten so wenig weit umgeklappt sind, dass ein Finger darunter passt, ist die Kraft gering, und wenn die Leisten (fast) ganz umgeklappt sind, passt kein Finger darunter.

In diesem Fall ist es zweckmäßig, wenn zur Feststellung der Position der Leiste im Bereich des Kniehebels ein Mikroschalter angeordnet ist. Auf diese Weise kann erkannt werden, ob alle Leisten umgeklappt sind (oder etwa eine Leiste - z.B. wegen eines Fingers - blockiert ist). Nur wenn alle Leisten umgeklappt sind, wird das Heizelement eingeschaltet.

Schließlich ist es vorteilhaft, dass ein von unten in die Druckplatte eingreifender Auswerfer vorgesehen ist. Der Auswerfer hebt die fertige Verpackung aus der Schweißeinrichtung und vereinfacht die Entnahme.

Die erfindungsgemäße Aufschnittschneidemaschine ist dadurch gekennzeichnet, dass die Schweißeinrichtung an einer Vorschub- bzw. Positioniereinrichtung der Aufschnittschneidemaschine angeordnet ist. Bestehende Aufschnittschneidemaschinen können einfach mit einer Schweißeinrichtung nachgerüstet werden, indem man das vorhandene, auf eine Vorschubeinrichtung aufgesetzte Ablagetablett durch die erfindungsgemäße Schweißeinrichtung ersetzt.

### Kurze Beschreibung der Zeichnungen

Ein Ausführungsbeispiel des Erfindungsgegenstandes ist in den beiliegenden Zeichnungen dargestellt.

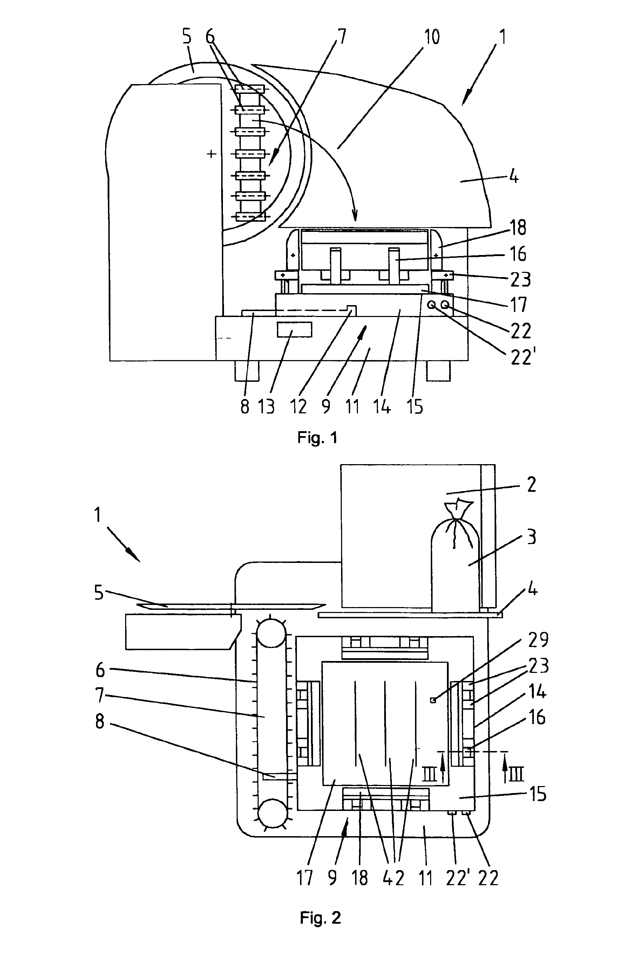

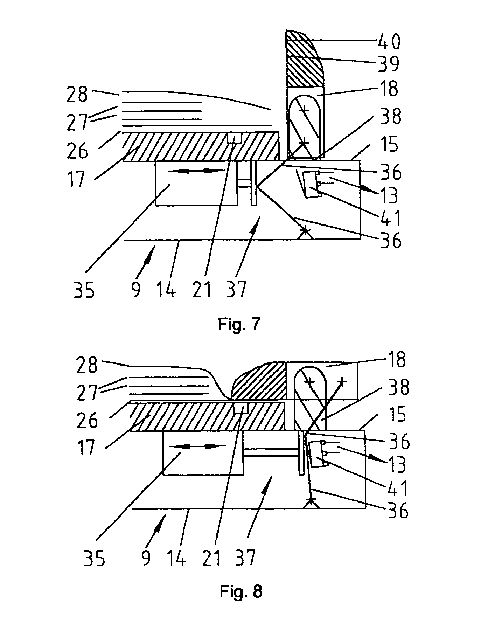

Fig. 1 zeigt eine erfindungsgemäße Aufschnittschneidemaschine mit einer erfindungsgemäßen Schweißeinrichtung in Seitenansicht; Fig. 2 zeigt eine Draufsicht auf die Aufschnittschneidemaschine gemäß Fig. 1; Fig. 3 bis 6 zeigen geschnittene Detailansichten der Aufschnittschneidemaschine entlang der Linie III-III in Fig. 2 mit verschiedenen Stellungen der Leisten; und Fig. 7 und 8 zeigen eine Schweißeinrichtung mit stationärer Druckplatte mit verschiedenen Stellungen der Leisten.

### Beste Ausführungsform der Erfindung

Gemäß Fig. 1 und 2 umfasst eine Aufschnittschneidemaschine 1 einen Schnittgutwagen 2 zum Auflegen von Schnittgut 3. Der Schnittgutwagen 2 wird händisch oder durch einen reversierenden Elektroantrieb längs einer Anschlagplatte 4 gegen ein rotierendes Kreismesser 5 und zurück verfahren. Die Schnittstärke wird durch Vergrößern oder Verkleinern des Abstands zwischen dem Kreismesser 5 und der Anschlagplatte 4 eingestellt. Jede abgeschnittene Schnittgutscheibe gelangt auf die Spitzen von Ketten 6 eines Kettenrahmens 7. Eine im Sockelgehäuse 11 untergebrachte nicht dargestellte programmierbare elektronische Steuerung gibt die Förderweglänge jeder Schnittgutscheibe auf den Ketten 6 des Kettenrahmens 7 vor und steuert auch einen ebenfalls nicht dargestellten Antriebsmotor für eine Vorschubeinrichtung 8 eines Ablegetablettes bzw. einer Schweißeinrichtung 9 schrittweise an, sodass die von einem die Ketten 6 hintergreifenden Schläger in Richtung des Pfeils 10 abgeworfenen Schnittgutscheiben 27 einen in zwei Achsrichtungen überlappenden Aufschnitt bilden können. Ein einfaches Stapeln der Schnittgutscheiben 27 übereinander ist ebenfalls möglich.

Üblicher Weise umfasst die Vorschubeinrichtung 8 ein horizontal verschiebbares Gestänge, wie zum Beispiel eine Zahnstange, die mittels eines Antriebsmotors entlang des Ablegebereichs der Aufschnittschneidemaschine 1 vor und zurück verschiebbar ist. Die Vorschubeinrichtung 8 verfügt über einen nach oben stehenden Zapfen 12, der in eine Ausnehmung in einer Führungsnut an der Unterseite der Schweißeinrichtung 9 eingreift.

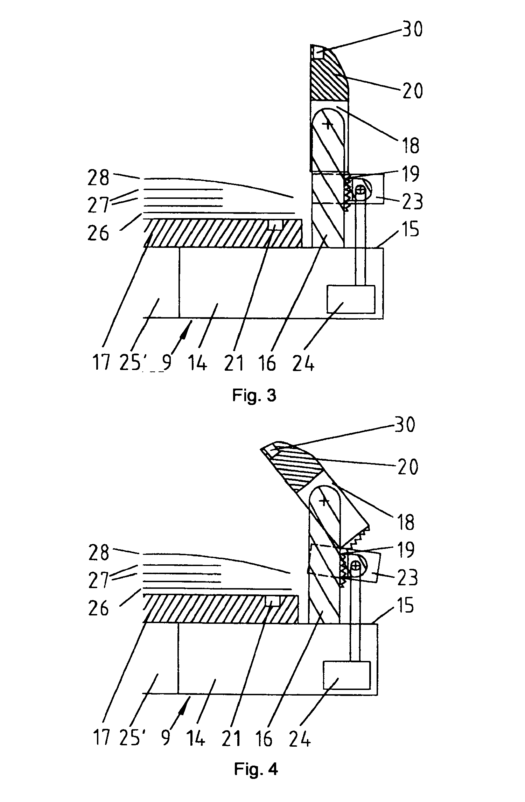

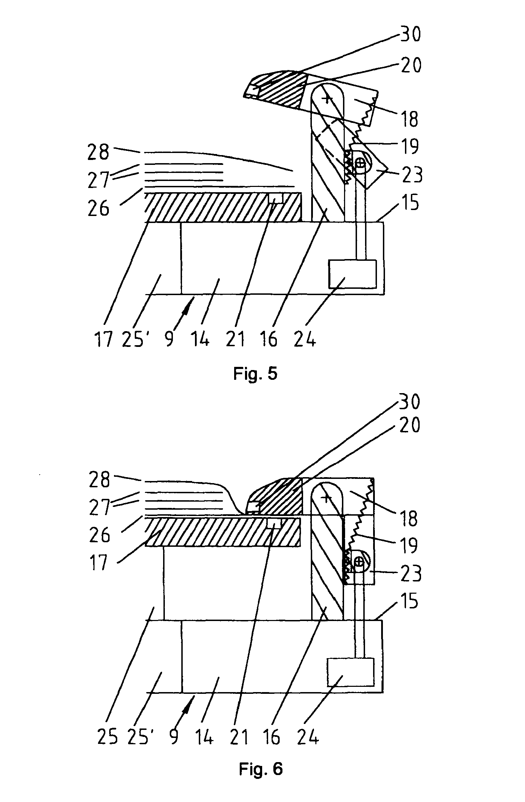

Die Schweißeinrichtung 9 umfasst ein vorzugsweise quadratisches Gehäuse 14 mit einer oberen Gehäusewand 15, auf der im Randbereich entlang der Gehäusekante Träger 16 angeordnet sind. Auf der innerhalb der Träger 16 ausgebildeten quadratischen freien Fläche ist oberhalb der Gehäusewand 15 eine anhebbare Druckplatte 17 zur Ablage von Folien und Schnittgut 27 vorgesehen. Auf jeder Gehäuseseite sind zwei Träger 16 vorgesehen, an welchen eine Leiste 18 drehbar angeordnet ist. Die Leiste 18 kann von der Stellung gemäß Fig. 3 - wo ein Leistenkopf 20 genau über dem Träger 16 steht - und über die Stellungen gemäß Fig. 4 und 5 in eine waagrechte Position gemäß Fig. 6 - wo sich der Leistenkopf 20 direkt über der Druckplatte 17 befindet - verdreht bzw. umgeklappt werden. Zur Lagerung und Aufnahme des Trägers 16 an dessen Spitze verfügt die Leiste 18 über einen Ausschnitt, damit die Leiste 18 in der hochgeklappten Position nicht über die angrenzende Druckplatte 17 ragt. Durch Optimierung der Ausschnitte in den Leisten 18 bzw. eine breitere Ausführung der Leiste 18 in Relation zur Breite des Stehers 16 ist eine auf der Oberseite geschlossene Ausführung der Leiste 18 möglich. Der Drehpunkt der Leiste 18 befindet sich etwa in der Mitte ihrer Breite. In den Bereichen unterhalb der Leistenköpfe 20 verfügt die Druckplatte 17 über Heizelemente 21. An jeder Leiste 18 ist ein vorgespanntes Federelement 19 (vorzugsweise eine Spiralfeder) vorgesehen, damit die Leiste 18 im Ruhezustand der Schweißeinrichtung 9 gemäß Fig. 3 nach oben ragt und die gesamte Fläche der Druckplatte 17 von oben frei zugänglich ist. Die Schweißeinrichtung 9 ist nun für das Ablegen von Schnittgutscheiben 27 bereit. Bevor das Schneiden und Ablegen an der Aufschnittschneidemaschine 1 gestartet wird, muss noch händisch eine erste Folie 26 auf die Druckplatte 17 der Schweißeinrichtung 9 gelegt werden. Damit die auf die Druckplatte 17 abgelegte erste Folie 26 während des Ablegens der Wurstscheiben nicht verrutschen kann, sind auf der Druckplatte 17 flache Rippen 42 (vorzugsweise aus Silikon oder Gummi) angeordnet. Wurden genügend Schnittgutscheiben 27 mit dem Schläger auf der ersten Folie 26 abgelegt und die Aufschnittschneidemaschine 1 angehalten, wird zum Verpacken der Schnittgutscheiben 27 eine zweite Folie 28 auf die auf der Druckplatte 17 abgelegten Schnittgutscheiben 27 aufgelegt.

Der Schweißvorgang der Schweißeinrichtung 9 wird über eine Taste 22 gestartet und von der Steuerung schrittweise ausgeführt. Die Taste 22 kann entweder auf dem Gehäuse 14 der Schweißeinrichtung 9 oder auf dem Sockelgehäuse 11 der Aufschnittschneidemaschine 1 angeordnet sein. Im zuletzt genannten Fall ist es zweckmäßig, die Spannungsversorgung der Schweißeinrichtung 9 direkt an der Aufschnittschneidemaschine 1 zur Verfügung zu stellen. An der Schweißeinrichtung 9 ist weiters ein Einstellschalter 22' für die Vorwahl der Schweißdauer vorgesehen. Ein günstiger Zeitbereich für die Schweißdauer liegt zwischen 1,5 und 3 Sekunden. Die an jedem Träger 16 unterhalb der Leisten 18 drehbar gelagerten Fixierstücke 23 werden mittels eines Motors 24 aus einer waagrechten Position (Fig. 3) um 90° in eine senkrechte Position (Fig. 6) verdreht. Während der synchronen Verdrehung aller Fixierstücke 23 von der waagrechten (Fig. 3) in die senkrechte (Fig. 6) Position liegt jeweils eine Kante der Stirnflächen der Fixierstücke 23 an der jeweiligen Unterseite der zugehörigen Leiste 18 an. Aus Gründen der besseren Verständlichkeit wurden die eigentlich unsichtbaren Kanten der Leiste 18 im Bereich des Trägers 16 sichtbar dargestellt. Wenn das Fixierstück 23 gemäß Fig. 6 seine senkrechte Position erreicht hat, liegt die Stirnfläche des Fixierstückes 23 vollflächig an der Unterseite der waagrecht ausgerichteten Leiste 18 auf. Die vier Leisten 18 entlang des Umfangs über der Druckplatte 17 sind nun für den eigentlichen Schweißvorgang bereit. Um den Schweißvorgang durchzuführen, wird die Druckplatte 17 von ihrer Ruheposition gemäß Fig. 3, wo die Druckplatte 17 auf der Gehäusewand 15 aufliegt, in die Schweißposition gemäß Fig. 6 bis zum Anschlag an die Unterseite der Leisten 18 angehoben und angepresst. Das Anheben der Druckplatte 17 erfolgt beispielsweise mit einem in der Mitte der Druckplatte 17 angeordneten Hubstempel 25 und einem Antrieb 25'.

Die elektrischen Heizelemente 21 werden von Strom durchflossen und verschweißen die übereinander liegenden Folien 26 und 28. Es ist auch möglich, vor dem Schweißvorgang auf der zweiten Folie 28 weitere Schnittgutlagen und Abdeckfolien abzulegen und diese gemeinsam zu einer Verpackung zu verschweißen. Dabei bilden immer zwei benachbarte Folien eine eigene Kammer. Diese Variante hat beim Verbrauchen der Ware den Vorteil, dass immer nur die jeweiligen Schnittgutscheiben 27 der gerade geöffneten Kammer schnell aufgebraucht werden müssen und der Inhalt der restlichen Kammern frisch verpackt bleibt.

Um Pakete mit mehreren voneinander getrennten Kammern sicher miteinander zu verschweißen, ist ein Anpressdruck von der Druckplatte 17 gegen die einen rundumlaufenden Andruckrahmen bildenden Leisten 18 von ca. 30 kg erforderlich. Dem hohen Anpressdruck der Druckplatte 17 auf die Leistenköpfe 20 wird an der Unterseite des gegenüberliegenden Endes der Leisten 18 (Fig. 6) mit den flächig aufliegenden Stirnflächen der Fixierstücke 23 entgegengewirkt. Nach dem Verschweißen wird die dazu angehobene Druckplatte 17 wieder in Richtung der Gehäusewand 15 abgesenkt, und die Leisten 18 werden von der waagrechten in die senkrechte Position (Fig. 6 bis 3) verschwenkt.

Um die Entnahme der fertig verschweißten Verpackungen bei senkrecht stehenden Leisten 18 besonders einfach zu gestalten, ist ein die Gehäusewand 15 und die Druckplatte 17 von unten durchgreifender Auswerfer 29 vorgesehen, der die Verpackung auf einer Seite der Druckplatte 17 abhebt.

Als Ausführungsvariante ist es auch möglich, anstatt die Druckplatte 17 für den Schweißvorgang anzuheben, die Träger 16 mit den Leisten 18 in Richtung der Druckplatte 17 abzusenken.

Die Leiste 18 verfügt in der Stirnseite des Leistenkopfes 20 über Sensoren 30, welche während des Anhebens der Druckplatte 17 den freien Querschnitt zwischen den Leisten 18 überwachen. Wird das von den Sensoren 30 ausgebildete "Sicherheitsnetz" von einem Gegenstand, zum Beispiel einer Extremität des Bedienpersonals, unterbrochen, so wird diese Information an die elektronische Steuerung weitergeleitet, welche das Anheben sofort anhält, bis der Gegenstand den freien Querschnitt zwischen den Leisten 18 wieder verlässt.

Die in den Fig. 1 bis 6 beschriebene Ausführungsvariante einer Schweißeinrichtung 9 verschweißt die Folien 26, 28 jeweils im mittleren Bereich einer Längsseite, und die Eckbereiche bleiben unverschweißt, um gerade beim Verpacken von Käse eine minimale Luftzirkulation zu ermöglichen. Möchte man die Verpackung mit einer rundumlaufenden Schweißnaht versehen, so besteht eine Lösungsmöglichkeit darin, die Leisten 18 gleich lang wie die jeweils zugehörige Seitenlänge der Druckplatte 17 auszubilden und die Enden der Leisten 18 in einem Winkel von 45° abzuschneiden, sodass sich ein rundumlaufender Andruckrahmen ergibt.

Bei der Ausführungsvariante nach den Fig. 7 und 8 ist die Druckplatte 17 stationär an der oberen Gehäusewand 15 angeordnet. Das Umklappen der Leisten 18 erfolgt mittels eines Elektromagneten 35, welcher kinematisch über einen Kniehebel 36 mit den Leisten 18 in Verbindung steht. Jeder Leiste 18 ist mindestens eine Antriebseinheit 37, bestehend aus einem Elektromagneten 35 und einem Kniehebel 36, zugeordnet. Die Antriebseinheiten 37 sind unterhalb der Druckplatte 17 innerhalb des Sockelgehäuses 11 angeordnet. Die Leiste 18 wird von zwei Trägern 38 in ihrer Position oberhalb der Druckplatte 17 drehbar gelagert gehalten. Gemäß Fig. 8 ist die Höhe des Trägers 38 so gewählt, dass die Leiste 18 in der Schweißposition mit ihrer Andruckfläche 39 auf der Druckplatte 17 aufliegt. Um den Anpressdruck der Andruckfläche 39 an die Druckplatte 17 im Bereich oberhalb der Heizelemente 21 zu konzentrieren und eventuell vorhandene Unebenheiten oder Toleranzen auszugleichen, ist im gegenüberliegenden Bereich der Andruckfläche 39 eine Andruckleiste 40 vorgesehen. Die Andruckleiste 40 besteht vorzugsweise aus einem leicht elastischen Silikongummi-Profil. Die Leisten 18 sind in einem Drehbereich von etwa 90° aus einer senkrechten Ruheposition (Fig. 7) in eine waagrechte Schweißposition (Fig. 8) mittels der Antriebseinheit 37 verschwenkbar. In der Ruheposition wird die Leiste 18 mit einem Federelement 19 in ihrer senkrechten Position gehalten.

Ausgehend von der Ruheposition bis etwa 2 mm bis 4 mm oberhalb der Druckplatte 17 verfügt die Antriebseinheit 37 gerade über so viel Kraft, dass die Federkraft des Federelements 19 überwunden wird und sich die Leiste 18 in Richtung der Druckplatte 17 bewegt.

Kollidiert die Leiste 18 während des Schwenkvorgangs mit einem Hindernis, z.B. einem Finger oder einer Hand, so wird der Schwenkvorgang blockiert und erst wieder fortgesetzt, wenn das Hindernis den Schwenkbereich der Leiste 18 verlässt.

Die Antriebseinheit 37 entwickelt ihre volle Druckkraft erst in den letzten 2 mm bis 4 mm des Schwenkbereichs der Leiste 18, bevor sich diese in der Schweißposition befindet. In der Schweißposition bzw. Endposition ist der Kniehebel 36 fast ganz durchgestreckt (deshalb wird eine hohe Kraft erzeugt), und eine Steuerfläche des Kniehebels 36 betätigt einen Mikroschalter 41. Der Schweißvorgang wird erst gestartet, wenn alle den entsprechenden Leisten 18 zugeordnete Mikroschalter 41 betätigt sind und die Steuerung 13 das gemeinsame Freigabesignal aller vorhandenen Mikroschalter 41 erhält.

## Patentansprüche

1. Schweißeinrichtung (9) zum Verschweißen von zumindest zwei übereinander liegenden Folien mit einer Druckplatte (17), einem Andruckrahmen und einem Heizelement (21), insbesondere als Ablegetablett für eine Aufschnittschneidemaschine, **dadurch gekennzeichnet, dass** der Andruckrahmen aus jeweils um deren Längsachse umklappbaren Leisten (18) besteht, wobei in der hochgestellten Stellung der Leisten (18) die Druckplatte (17) von oben frei zugänglich ist und in der Schweiß-Stellung der Leisten (18) der Randbereich der Druckplatte (17) von den Leisten (18) überdeckt ist.

2. Schweißeinrichtung nach Anspruch 1, **dadurch gekennzeichnet, dass** jeder Leiste (18) zum Verweilen in der hochgeschwenkten Position mindestens ein Federelement (19) zugeordnet ist.

3. Schweißeinrichtung nach einem der Ansprüche 1 oder 2, **dadurch gekennzeichnet, dass** die Leisten (18) im äußeren Randbereich über eine Verriegelung, die Fixierstücke (23) umfasst, verfügen und dass die Fixierstücke (23) zum Umklappen der Leisten (18) drehbar gelagert sind.

4. Schweißeinrichtung nach einem der Ansprüche 1 bis 3, **dadurch gekennzeichnet, dass** die Druckplatte (17) gegenüber dem fest stehenden Andruckrahmen anhebbar angeordnet ist.

5. Schweißeinrichtung nach einem der Ansprüche 1 bis 3, **dadurch gekennzeichnet, dass** der Andruckrahmen gegenüber der fest stehenden Druckplatte (17) absenkbar angeordnet ist.

6. Schweißeinrichtung nach einem der Ansprüche 1 bis 5, **dadurch gekennzeichnet, dass** in den Leisten (17) zur Überwachung des offenen Bereichs Sensoren (30) und/oder Empfänger angeordnet sind.

7. Schweißeinrichtung nach Anspruch 1 oder 2, **dadurch gekennzeichnet, dass** zum Umklappen der Leisten (18) mindestens je ein Elektromagnet (35) vorgesehen ist, der über einen Kniehebel (36) mit der Leiste (18) kinematisch verbunden ist.

8. Schweißeinrichtung nach Anspruch 7, **dadurch gekennzeichnet, dass** zur Feststellung der Position der Leiste (18) im Bereich des Kniehebels (36) ein Mikroschalter (41) angeordnet ist.

9. Schweißeinrichtung nach einem der Ansprüche 1 bis 8, **dadurch gekennzeichnet, dass** ein von unten in die Druckplatte (17) eingreifender Auswerfer (29) vorgesehen ist.

10. Aufschnittschneidemaschine mit einer Schweißeinrichtung nach einem der Ansprüche 1 bis 9, **dadurch gekennzeichnet, dass** die Schweißeinrichtung (9) an einer Vorschub- (8) bzw. Positioniereinrichtung der Aufschnittschneidemaschine (1) angeordnet ist.

## Claims

1. Welding unit (9) for welding at least two films which lie one over the other, the unit comprising a pressure plate (17), a pressing frame and a heating element (21), the welding unit serving in particular as a depositing tray for a slice-cutting machine, characterising that the pressing frame consists of bars (18), each of which can be turned down about its longitudinal axis, the pressure plate (17) being freely accessible from above when the bars (18) are in their raised-up position, and the edge region of the pressure plate (17) being covered over by the bars (18) in the welding position of the bars (18).

2. Welding unit according to Claim 1, **characterised in that** at least one spring element (19) is associated with each bar (18), in order to hold the bar in the upwardly-pivoted position.

3. Welding unit according to either of Claims 1 or 2, **characterised in that** the bars (18) are provided, in the outer edge region, with a latch which comprises securing portions (23), and **in that** the securing portions (23) are rotatably mounted in order to effect the turning-down of the bars (18).

4. Welding unit according to any of Claims 1 to 3, **characterised in that** the pressure plate (17) is arranged so that it can be raised up relative to the fixedly-located pressing frame.

5. Welding unit according to any of Claims 1 to 3, **characterised in that** the pressing frame is arranged so that it can be lowered relative to the fixedly-located pressure plate (17).

6. Welding unit according to any of Claims 1 to 5, **characterised in that** sensors (30) and/or receptors are disposed in order to monitor the open region.

7. Welding unit according to Claim 1 or 2, **characterised in that** in each case at least one electromagnet (35) is provided for turning down the bars (18), the electromagnet being connected kinematically to the bar (18) by way of a toggle lever (36).

8. Welding unit according to Claim 7, **characterised in that** in order to determine the position of the bar (18), a microswitch (41) is provided in the region of the toggle lever (36).

9. Welding unit according to any of Claims 1 to 8, **characterised in that** an ejector (29) is provided, the ejector engaging in the pressure plate (17) from beneath.

10. Slice-cutting machine having a welding unit according to any of Claims 1 to 9, **characterised in that** the welding unit (9) is located on an advancing unit (8) or a positioning unit of the slice-cutting machine (1).

## Revendications

1. Appareil de soudage (9) pour le soudage d'au moins deux films superposés, comprenant une plaque de pression (17), un cadre de contre-pression et un élément de chauffage (21), en particulier comme plateau récepteur pour une machine de découpe en tranches, **caractérisé en ce que** le cadre de contre-pression est constitué respectivement de lattes (18) rabattables autour de leur axe longitudinal, dans lequel la plaque de pression (17) est librement accessible du dessus dans la position haute des lattes (18) et la zone marginale de la plaque de pression (17) est recouverte par les lattes (18) dans la position de soudage des lattes (18).

2. Appareil de soudage selon la revendication 1, **caractérisé en ce qu'**à chaque latte (18) est affecté au moins un élément à ressort (19) pour rester dans la position articulée haute.

3. Appareil de soudage selon l'une quelconque des revendications 1 ou 2, **caractérisé en ce que** les lattes (18) disposent dans la zone marginale extérieure d'un verrouillage qui comprend des pièces de fixation (23) et les pièces de fixation (23) sont montées à rotation pour rabattre les lattes (18).

4. Appareil de soudage selon l'une quelconque des revendications 1 à 3, **caractérisé en ce que** la plaque de pression (17) est agencée de manière à pouvoir se soulever par rapport au cadre de contre-pression qui reste fixe.

5. Appareil de soudage selon l'une quelconque des revendications 1 à 3, **caractérisé en ce que** le cadre de contre-pression est agencé de manière à pouvoir s'abaisser par rapport à la plaque de pression (17) qui reste fixe.

6. Appareil de soudage selon l'une quelconque des revendications 1 à 5, **caractérisé en ce que** des capteurs (30) et/ou des récepteurs sont agencés dans les lattes (17) pour surveiller la zone ouverte.

7. Appareil de soudage selon la revendication 1 ou 2, **caractérisé en ce qu'**il est prévu pour rabattre les lattes (18) au moins respectivement un électroaimant (35) qui est connecté de manière cinématique aux lattes (18) via un levier à genouillère (36).

8. Appareil de soudage selon la revendication 7, **caractérisé en ce qu'**un microrupteur (41) est agencé dans la zone du levier à genouillère (36) pour fixer la position de la latte (18).

9. Appareil de soudage selon l'une quelconque des revendications 1 à 8, **caractérisé en ce qu'**il est prévu un éjecteur (29) s'engageant par le dessous dans la plaque de pression (17).

10. Machine de découpe en tranches équipé d'un appareil de soudage selon l'une quelconque des revendications 1 à 9, **caractérisée en ce que** l'appareil de soudage (9) est agencé dans un dispositif d'avancement (8) ou de positionnement de la machine de découpe en tranches (1).
